# EUROPEAN PATENT SPECIFICATION

(11) **EP 4 274 970 B1**
(45) Date of publication and mention of the grant of the patent: **28.01.2026**
(21) Application number: 21917976.9
(22) Date of filing: 14.12.2021
(51) Int. Cl.: F16B 12/12, A47B 47/04, F16B 12/26, F16B 12/46

(54) **A SET OF PANELS PROVIDED WITH A MECHANICAL LOCKING DEVICE FOR LOCKING A FIRST PANEL TO A SECOND PANEL AT A CORNER**
PANEELSATZ MIT EINER MECHANISCHEN VERRIEGELUNGSVORRICHTUNG ZUM VERRIEGELN EINES ERSTEN PANEELS AN EINER ZWEITEN PLATTE AN EINER ECKE
ENSEMBLE DE PANNEAUX DOTÉS D'UN DISPOSITIF DE VERROUILLAGE MÉCANIQUE PERMETTANT DE VERROUILLER UN PREMIER PANNEAU À UN SECOND PANNEAU AU NIVEAU D'UN COIN

(30) Priority: 11.01.2021 SE 2150012
(43) Date of publication of application: 15.11.2023
(73) Proprietor: Välinge Innovation AB, 263 64 Viken (SE)
(72) Inventor: DERELÖV, Peter, 252 84 Helsingborg (SE)
(74) Representative: Välinge Innovation AB
(86) International application number: PCT/SE2021/051247
(87) International publication number: WO 2022/150001

(56) References cited:
- WO-A1-2014/108114
- WO-A1-2016/099396
- WO-A1-2017/131574
- WO-A1-2020/156954
- DE-A1- 102014 110 124
- US-A1- 2017 227 035

## Description

### Technical field of the invention

Embodiments of the present invention relate to panels configured to be locked together with a mechanical locking device preferably without the need of using tools. The panels may be panels that may be assembled and locked together to obtain a furniture product, such as a bookshelf, a cupboard, a wardrobe, a box, a drawer or a furniture component and may thereafter be dismantled. The mechanical locking device may comprise a flexible tongue.

### Technical background

A furniture product provided with a mechanical locking device is known in the art, as evidenced by WO2015/038059 or WO2017/131574. The furniture products earlier described comprise a first panel connected perpendicular to a second panel by a mechanical locking device comprising a flexible tongue in an insertion groove.

Embodiments of the present invention address a need to provide panels that can be assembled and dismantled, having an improved stiffness and strength of the mechanical locking device.

### Summary of the invention

It is an object of certain aspects of the present invention to provide an improvement over the above described techniques and known art. A specific objective is to improve assembling of panels, such as furniture panels, locked together by a mechanical locking device preferably without the need of using tools. The panels may be a part of a furniture product, such as a furniture component, a drawer, a cupboard, a bookshelf, a wardrobe, a kitchen fixture, or a box.

A further object of at least certain aspects of the present invention is to facilitate assembling and disassembling of panels configured to be assembled with a locking device that is easy to manufacture and to use and which reduces the risk of damaging the panels during assembly and use.

A further object of at least certain aspects of the present invention is to facilitate assembling of panels configured to be assembled with a locking device that is easy to use and install and which reduces the risk of incorrect installation thereof.

A further object of at least certain aspects of the present invention is to facilitate assembling of panels configured to be assembled in a more stable and aesthetic way.

At least some of these and other objects and advantages that will be apparent from the description have been achieved by a set of panels comprising a first panel with a first main plane and a second panel with a second main plane, wherein the first panel and the second panel are provided with a mechanical locking device for locking of a first edge of the first panel to a second edge of the second panel at a junction plane and at a corner, wherein the first main plain is essentially perpendicular to the second main plane and the junction plane is extending at an angle to the first main plane and the second main plane between the first main plane and the second main plane, wherein the junction plane extends from an inner corner to an outer corner, wherein the first edge of the first panel comprises a first tongue groove and a first locking tongue, the second edge of the second panel comprises a second locking tongue, and a second and third tongue groove, wherein the second locking tongue is configured to cooperate with the first tongue groove and the first locking tongue is configured to cooperate with the second tongue groove, for locking together the first panel and the second panel in a first direction which is perpendicular to the second main plane, the first edge comprises a locking element, said locking element is configured to cooperate with the third tongue groove for locking together the first panel and the second panel in a second direction which is perpendicular to the first main plane, and wherein a bottom surface of the first tongue groove of the first panel is diverging from a first panel surface of the first panel.

According to the invention the bottom surface is diverging in a direction from the outer corner towards the inner corner.

According to the invention the first tongue groove comprises a first lower rounding and an opposite second lower rounding.

According to the invention the bottom surface extends between the first lower rounding and the second lower rounding.

According to an aspect a distance between the bottom surface of the first tongue groove and the first panel surface of the first panel increases towards the inner corner.

According to an aspect the locking element comprises a flexible tongue arranged in an insertion groove.

According to an aspect an angle between the bottom surface of the first tongue groove and the first panel surface is greater than zero to about 45 °, preferably about 10 ° to about 30 °, more preferably about 20 °.

According to an aspect, when the first panel and the second panel are in a locked position, there is a space between an outer edge of the second locking tongue and the bottom surface of the first tongue groove.

According to an aspect a minimum distance between the bottom surface of the first tongue groove and the first panel surface of the first panel is about 10 % to about 40 % of a panel thickness, preferably about 20 % of a panel thickness.

According to an aspect a first radius of the first tongue groove at the bottom surface is about 5 % to about 15 % of the panel thickness, preferably about 10 % of the panel thickness.

According to an aspect a second radius of the first tongue groove at the bottom surface is about 5 % to about 15 % of the panel thickness, preferably about 10 % of the panel thickness.

According to an aspect the first panel comprises a first edge tongue with a first locking surface which is essentially parallel with the junction plane.

According to an aspect an angle between the junction plane and the second main plane is about 45°.

According to an aspect the first edge of the first panel comprises a second edge tongue at the outer corner, wherein the second edge of the second panel comprises a third edge tongue at the outer corner, wherein a first locking surface of the second edge tongue is configured to cooperate with a second locking surface of the second edge tongue for locking in the second direction which is perpendicular to the first main plane.

According to an aspect a width of the first locking tongue in the first direction at a third locking surface of the first panel is about 10 % to about 50 % of the panel thickness, preferably about 20 % of the panel thickness, more preferably about 40 % of the panel thickness, even more preferably about 30 % of the panel thickness.

According to an aspect the width of the first locking tongue is about the same or larger than a width of the second locking tongue from a fourth locking surface to a fifth locking surface of the second panel in the first direction.

According to an aspect the third locking surface of the first panel is configured to cooperate with the fifth locking surface of the second panel for locking together the first panel and the second panel in the first direction.

According to an aspect the fourth locking surface of the second panel is configured to cooperate with a sixth locking surface of the first panel for locking together the first panel and the second panel in the first direction.

According to an aspect the core of the first panel and/or of the second panel may be a wood-based core, preferably made of MDF, HDF, OSB, WPC, plywood or particleboard. The core may also be a plastic core comprising thermosetting plastic or thermoplastic e.g. vinyl, PVC, PU or PET. The plastic core may comprise fillers.

The first panel and/or the second panel may also be of solid wood.

The first panel and/or the second panel may be provided with a decorative layer, such as a foil or a veneer, on one or more surfaces.

### Brief description of the drawings

These and other aspects, features and advantages of which embodiments of the invention are capable of, will be apparent and elucidated from the following description of embodiments and aspects of the present invention, reference being made to the accompanying drawings, in which
FIG. 1 shows a side view of an embodiment of a first panel.
FIG. 2 shows a side view of an embodiment of a second panel.
FIG. 3 shows a side view of an embodiment of a set of panels according to the invention. The panels are in a locked position.
FIG. 4 shows a side view of an embodiment of a set of panels according to the invention, where a flexible tongue is positioned in the insertion groove. The panels are in a locked position.
FIG. 5 shows a 3D-view of an embodiment of a set of panels according to the invention in an assembled state.
FIG. 6 shows an embodiment of a set of panels according to the invention in an assembled state.

### Detailed description

Specific embodiments of the invention will now be described with reference to the accompanying drawings. This invention may, however, be embodied in many different forms and should not be construed as limited to the embodiments set forth herein, rather, these embodiments are provided so that this disclosure will be thorough and complete, and will fully convey the scope of the invention to those skilled in the art. The terminology used in the detailed description of the embodiments illustrated in the accompanying drawings is not intended to be limiting of the invention. In the drawings, like numbers refer to like elements.

The terminology used herein is for the purpose of describing particular aspects of the disclosure only, and is not intended to limit the disclosure. As used herein, the singular forms "a", "an" and "the" are intended to include the plural forms as well, unless the context clearly indicates otherwise.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example aspects may be implemented at least in part by means of both hardware and software, and that several "means", "units" or "devices" may be represented by the same item of hardware.

The different aspects, alternatives and embodiments of the invention disclosed herein can be combined with one or more of the other aspects, alternatives and embodiments described herein. Two or more aspects can be combined.

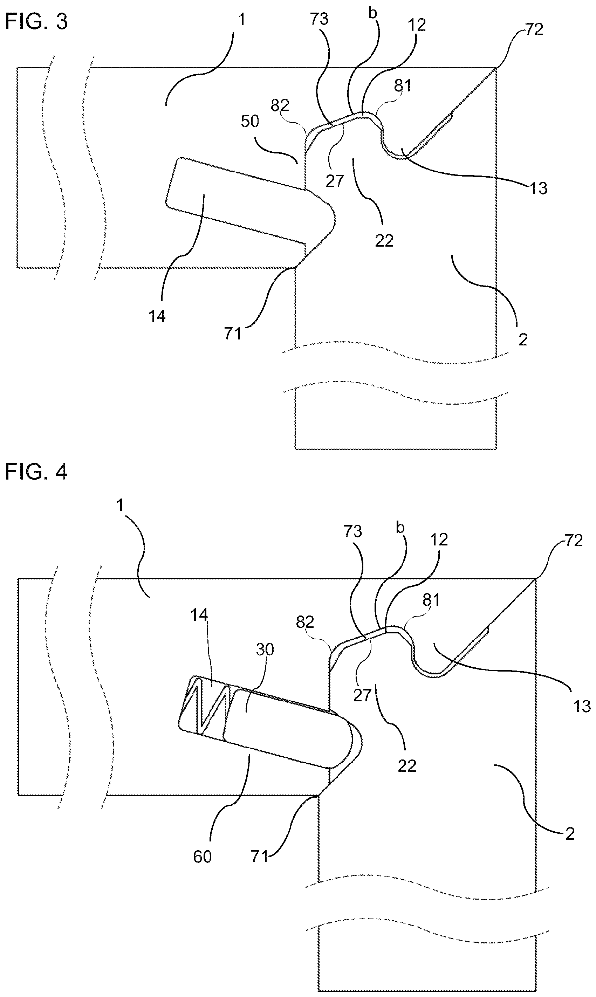

An embodiment of the invention is shown e.g. in FIGS 3-4 including a set of panels comprising a first panel 1 with a first main plane and a second panel 2 with a second main plane. The first panel 1 and the second panel 2 are provided with a mechanical locking device for locking of a first edge 11 of the first panel 1 to a second edge 21 of the second panel 2 at a junction plane J and at a corner, wherein the first main plain is essentially perpendicular to the second main plane and the junction plane J is extending at an angle to the first main plane and the second main plane between the first main plane and the second main plane. The junction plane J extends from an inner corner 71 to an outer corner 72 of the first panel 1 and the second panel 2 in a locked position. The first edge 11 of the first panel 1 comprises a first tongue groove 12 and a first locking tongue 13, the second edge 21 of the second panel 2 comprises a second locking tongue 22, and a second and third tongue groove 23,24. The second locking tongue 22 is configured to cooperate with the first tongue groove 12 and the first locking tongue 13 is configured to cooperate with the second tongue groove 23, for locking together the first panel 1 and the second panel 2 in a first direction D1 which is perpendicular to the second main plane. The first edge 11 comprises a locking element 60, said locking element 60 is configured to cooperate with the third tongue groove 24 for locking together the first panel 1 and the second panel 2 in a second direction D2 which is perpendicular to the first main plane. A bottom surface b of the first tongue groove 12 of the first panel 1 is diverging from a first panel surface 15 of the first panel 1.

The bottom surface (b) is diverging in a direction from the outer corner (72) towards the inner corner (71).

The first tongue groove (12) comprises a first lower rounding (81) and an opposite second lower rounding (82).

The bottom surface (b) extends between the first lower rounding (81) and the second lower rounding (82).

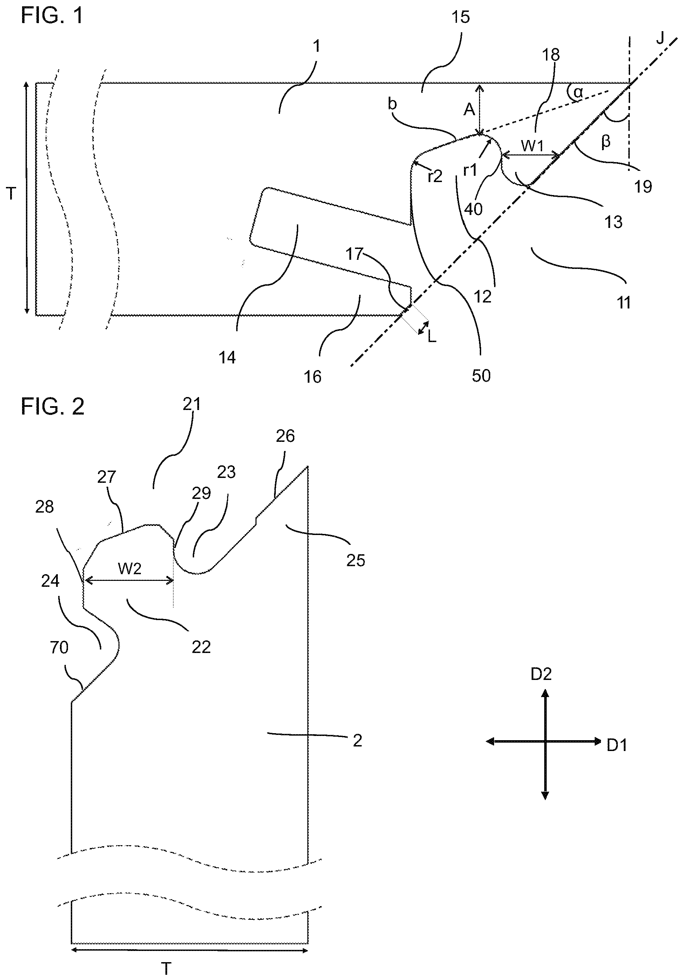

FIG. 1 shows an embodiment of the first panel 1 in detail, and FIG. 2 shows an embodiment of the second panel 2 in detail.

A distance A between the bottom surface b of the first tongue groove 12 and the first panel surface 15 of the first panel 1 may increase towards the inner corner 71.

The locking element 60 may comprise a flexible tongue 30 arranged in an insertion groove 14, as shown in FIG. 4.

An angle α between the bottom surface b of the first tongue groove 12 and the first panel surface 15 may be greater than zero to about 45 °, preferably about 10 ° to about 30 °, more preferably about 20 °.

When the first panel 1 and the second panel 2 are in the locked position, there may be a space 73 between an outer edge 27 of the second locking tongue 22 and the bottom surface b of the first tongue groove 12. The space is shown in FIGS. 3-4. This space reduces a tension created in the first and/or second panel 1,2 when the first and/or second panel 1,2 is in a locked position. The space may also increase the tightness of the joint at the outer and inner corner 71 of the assembled panels.

A minimum distance A between the bottom surface b of the first tongue groove 12 and the first panel surface 15 of the first panel 1 may be about 10 % to about 40 % of a panel thickness T, preferably about 20 % of a panel thickness T.

A first radius r1 of the first tongue groove 12 at the bottom surface b may be about 5 % to about 15 % of the panel thickness T, preferably about 10 % of the panel thickness T.

A second radius r2 of the first tongue groove 12 at the bottom surface b may be about 5 % to about 15 % of the panel thickness T, preferably about 10 % of the panel thickness T.

The first panel 1 may comprise a first edge tongue 16 with a first locking surface 17 which may be essentially parallel with the junction plane J.

The first locking surface 17 may have a length L. The length L of the first locking surface may be about 3 % to about 20 % of the panel thickness T, preferably about 5 % to about 10 % of the panel thickness T, even more preferably about 7% of the panel thickness T.

An angle β between the junction plane J and the second main plane may be about 45°.

The first edge 11 of the first panel 1 may comprise a second edge tongue 18 at the outer corner. The second edge 21 of the second panel 2 may comprise a third edge tongue 25 at the outer corner 72, wherein a first locking surface 19 of the second edge tongue 18 may be configured to cooperate with a second locking surface 26 of the second edge tongue 25 for locking in the second direction D2 which is perpendicular to the first main plane.

A width W1 of the first locking tongue 13 in the first direction D1 at a third locking surface 40 of the first panel 1 may be about 10 % to about 50 % of the panel thickness T, preferably about 20 % to about 40 % of the panel thickness T, even more preferably about 30 % of the panel thickness T.

The width W1 of the first locking tongue 13 may be about the same or larger than a width W2 of the second locking tongue 22 from a fourth locking surface 28 to a fifth locking surface 29 of the second panel 2 in the first direction D1.

The third locking surface 40 of the first panel 1 may be configured to cooperate with the fifth locking surface 29 of the second panel 2 for locking together the first panel 1 and the second panel 2 in the first direction D1.

The fourth locking surface 28 of the second panel 2 may be configured to cooperate with a sixth locking surface 50 of the first panel 1 for locking together the first panel 1 and the second panel 2 in the first direction D1.

The first locking surface 17 may be configured to cooperate with a seventh locking surface 70 of the second panel 2 in the first and/or the second direction D1,D2.

The flexible tongue 30 may comprise a flexible material to enable compression and a displacement of the flexible tongue 30 in the insertion groove 14 during assembling and disassembling.

The flexible tongue 30 may comprise an element which is flexible to enable compression and a displacement of the flexible tongue 30 in the insertion groove 14 during assembling and another element which is less flexible in order to improve the locking strength.

The combination of the features of the present invention result in a very strong mechanical locking of the panels, while reducing the tension in the first and second panel 1,2 during and/or after assembly, thereby reducing the risk for crack formation.

The first panel 1 may comprise a third edge which is opposite to the first edge, wherein the third edge is configured as the second edge of the second panel 2 described above. Consequently, a set of four pieces of the panel 1 according to the present invention may be assembled and locked together creating e.g. a frame 61. The mechanical locking device is not visible when the panels are assembled, giving a very aesthetic result.

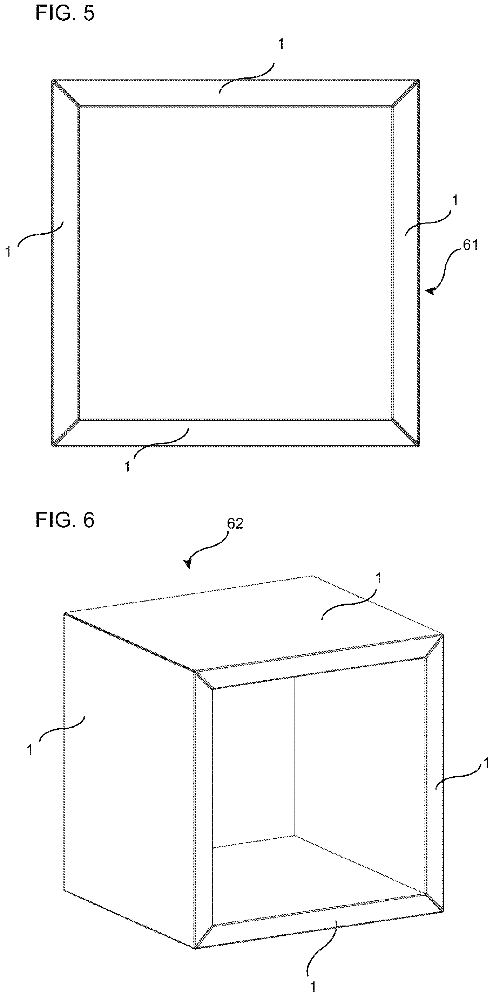

FIG. 5 shows an embodiment of the set of four pieces of the panel 1 in a locked position, creating a frame 61 for e.g. a furniture product.

FIG. 6 shows a 3D view an embodiment of the set of four pieces of the panel 1 according to the present invention in a locked position creating a furniture product 62. The mechanical locking device is not visible when the panels are assembled, giving a very aesthetic result.

For the different embodiments of the present invention described above, the first panel 1 and the second panel 2 are preferably panels for a furniture product and may be a part of a frame of a furniture product.

The core of the first panel 1 and/or of the second panel 2 may be a wood-based core, preferably made of MDF, HDF, OSB, WPC, plywood or particleboard. The core may also be a plastic core comprising thermosetting plastic or thermoplastic e.g. vinyl, PVC, PU or PET. The plastic core may comprise fillers.

The first panel 1 and/or the second panel 2 may also be of solid wood.

The first panel 1 and/or the second panel 2 may be provided with a decorative layer, such as a foil or a veneer, on one or more surfaces.

The first tongue groove 12, the second tongue groove 23, the third tongue groove 24 and/or the insertion groove 14 may be formed by mechanical cutting, such as milling or sawing.

The different aspects, embodiments and alternatives described above could be combined with one or more of the other described aspects, embodiments, and alternatives.

## Claims

1. A set of panels comprising a first panel (1) with a first main plane and a second panel (2) with a second main plane, wherein the first panel (1) and the second panel (2) are provided with a mechanical locking device for locking of a first edge (11) of the first panel (1) to a second edge (21) of the second panel (2) at a junction plane (J) and at a corner, wherein the first main plain is essentially perpendicular to the second main plane and the junction plane (J) is extending at an angle to the first main plane and the second main plane between the first main plane and the second main plane, wherein the junction plane (J) extends from an inner corner (71) to an outer corner (72), wherein the first edge (11) of the first panel (1) comprises a first tongue groove (12) and a first locking tongue (13), wherein the second edge (21) of the second panel (2) comprises a second locking tongue (22), and a second and third tongue groove (23,24), wherein the second locking tongue (22) is configured to cooperate with the first tongue groove (12) and the first locking tongue (13) is configured to cooperate with the second tongue groove (23), for locking together the first panel (1) and the second panel (2) in a first direction (D1) which is perpendicular to the second main plane, and wherein the first edge (11) comprises a locking element (60), said locking element (60) is configured to cooperate with the third tongue groove (24) for locking together the first panel (1) and the second panel (2) in a second direction (D2) which is perpendicular to the first main plane, wherein a bottom surface (b) of the first tongue groove (12) of the first panel (1) is diverging from a first panel surface (15) of the first panel (1), wherein
the bottom surface (b) is diverging in a direction from the outer corner (72) towards the inner corner (71), **characterised in**
**that** the first tongue groove (12) comprises a first lower rounding (81) and an opposite second lower rounding (82), and
**that** the bottom surface (b) extends between the first lower rounding (81) and the second lower rounding (82).

2. The set of panels as claimed in claim 1, wherein a distance (A) between the bottom surface (b) of the first tongue groove (12) and the first panel surface (15) of the first panel (1) increases towards the inner corner (71).

3. The set of panels as claimed in claim 1 or claim 2, wherein the locking element (60) comprises a flexible tongue (30) arranged in an insertion groove (14).

4. The set of panels as claimed in any one of the previous claims, wherein an angle (α) between the bottom surface (b) of the first tongue groove (12) and the first panel surface (15) is greater than zero to about 45 °, preferably about 10 ° to about 30 °, more preferably about 20 °.

5. The set of panels as claimed in any one of the previous claims, wherein, when the first panel (1) and the second panel (2) are in a locked position, there is a space between an outer edge (27) of the second locking tongue (22) and the bottom surface (b) of the first tongue groove (12).

6. The set of panels as claimed in any one of the previous claims, wherein a minimum distance (A) between the bottom surface (b) of the first tongue groove (12) and the first panel surface (15) of the first panel (1) is about 10 % to about 40 % of a panel thickness (T), preferably about 20 % of a panel thickness (T).

7. The set of panels as claimed in any one of the previous claims, wherein the first lower rounding (81) is a first radius (r1) which is about 5 % to about 15 % of the panel thickness (T), preferably about 10 % of a panel thickness (T).

8. The set of panels as claimed in any one of the previous claims, wherein the second lower rounding (82) is a second radius (r2) which is about 5 % to about 15 % of the panel thickness (T), preferably about 10 % of a panel thickness (T).

9. The set of panels as claimed in any one of the previous claims, wherein the first panel (1) comprises a first edge tongue (16) with a first locking surface (17) which is essentially parallel with the junction plane (J).

10. The set of panels as claimed in any one of the previous claims, wherein an angle (β) between the junction plane (J) and the second main plane is about 45°.

11. The set of panels as claimed in any one of the previous claims, wherein the first edge (11) of the first panel (1) comprises a second edge tongue (18) at the outer corner (72), wherein the second edge (21) of the second panel (2) comprises a third edge tongue (25) at the outer corner, wherein a first locking surface (19) of the second edge tongue (18) is configured to cooperate with a second locking surface (26) of the second edge tongue (25) for locking in the second direction (D2) which is perpendicular to the first main plane.

12. The set of panels as claimed in any one of the previous claims, wherein a width (W1) of the first locking tongue (13) in the first direction (D1) at a third locking surface (40) of the first panel (1) is about 10 % to about 50 % of the panel thickness (T), preferably about 20 % of the panel thickness (T), more preferably about 40 % of the panel thickness (T), even more preferably about 30 % of a panel thickness (T).

13. The set of panels as claimed in claim 12, wherein the width (W1) of the first locking tongue (13) is about the same or larger than a width (W2) of the second locking tongue (22) from a fourth locking surface (28) to a fifth locking surface (29) of the second panel in the first direction (D1).

14. The set of panels as claimed in claim 13, wherein the third locking surface (40) of the first panel (1) is configured to cooperate with the fifth locking surface (29) of the second panel (2) for locking together the first panel (1) and the second panel (2) in the first direction (D1).

15. The set of panels as claimed in claim 13 or claim 14, wherein the fourth locking surface (28) of the second panel (2) is configured to cooperate with a sixth locking surface (50) of the first panel (1) for locking together the first panel (1) and the second panel (2) in the first direction (D1).

## Patentansprüche

1. Plattensatz, umfassend eine erste Platte (1) mit einer ersten Hauptebene und eine zweite Platte (2) mit einer zweiten Hauptebene, wobei die erste Platte (1) und die zweite Platte (2) mit einer mechanischen Verriegelungsvorrichtung zum Verriegeln einer ersten Kante (11) der ersten Platte (1) mit einer zweiten Kante (21) der zweiten Platte (2) an einer Verbindungsebene (J) und an einer Ecke versehen sind, wobei die erste Hauptebene im Wesentlichen senkrecht zu der zweiten Hauptebene steht und sich die Verbindungsebene (J) in einem Winkel zu der ersten Hauptebene und zu der zweiten Hauptebene zwischen der ersten Hauptebene und der zweiten Hauptebene erstreckt, wobei sich die Verbindungsebene (J) von einer Innenecke (71) zu einer Außenecke (72) erstreckt, wobei die erste Kante (11) der ersten Platte (1) eine erste Federnut (12) und eine erste Verriegelungsfeder (13) umfasst, wobei die zweite Kante (21) der zweiten Platte (2) eine zweite Verriegelungsfeder (22) sowie eine zweite und eine dritte Federnut (23, 24) umfasst, wobei die zweite Verriegelungsfeder (22) konfiguriert ist, um mit der ersten Federnut (12) zusammenzuwirken, und die erste Verriegelungsfeder (13) konfiguriert ist, um mit der zweiten Federnut (23) zusammenzuwirken, um die erste Platte (1) und die zweite Platte (2) in einer ersten Richtung (D1) miteinander zu verriegeln, die senkrecht zu der zweiten Hauptebene verläuft, und wobei die erste Kante (11) ein
Verriegelungselement (60) umfasst, wobei das Verriegelungselement (60) konfiguriert ist, um mit der dritten Federnut (24) zusammenzuwirken, um die erste Platte (1) und die zweite Platte (2) in einer zweiten Richtung (D2) miteinander zu verriegeln, die senkrecht zu der ersten Hauptebene verläuft, wobei eine untere Oberfläche (b) der ersten Federnut (12) der ersten Platte (1) von einer ersten Plattenoberfläche (15) der ersten Platte (1) abweicht,
wobei die untere Oberfläche (b) in einer Richtung von der Außenecke (72) zu der Innenecke (71) abweicht, **dadurch gekennzeichnet,**
**dass** die erste Federnut (12) eine erste untere Rundung (81) und eine gegenüberliegende zweite untere Rundung (82) umfasst, und
**dass** sich die untere Oberfläche (b) zwischen der ersten unteren Rundung (81) und der zweiten unteren Rundung (82) erstreckt.

2. Plattensatz nach Anspruch 1, wobei ein Abstand (A) zwischen der unteren Oberfläche (b) der ersten Federnut (12) und der ersten Plattenoberfläche (15) der ersten Platte (1) zur Innenecke (71) hin zunimmt.

3. Plattensatz nach Anspruch 1 oder 2, wobei das Verriegelungselement (60) eine flexible Feder (30) umfasst, die in einer Einführnut (14) angeordnet ist.

4. Plattensatz nach einem der vorstehenden Ansprüche, wobei ein Winkel (α) zwischen der unteren Oberfläche (b) der ersten Federnut (12) und der ersten Plattenoberfläche (15) größer als null bis etwa 45°, vorzugsweise etwa 10° bis etwa 30°, mehr bevorzugt etwa 20° ist.

5. Plattensatz nach einem der vorstehenden Ansprüche, wobei, wenn die erste Platte (1) und die zweite Platte (2) in einer verriegelten Position sind, zwischen einer Außenkante (27) der zweiten Verriegelungsfeder (22) und der unteren Oberfläche (b) der ersten Federnut (12) ein Zwischenraum besteht.

6. Plattensatz nach einem der vorstehenden Ansprüche, wobei ein Mindestabstand (A) zwischen der unteren Oberfläche (b) der ersten Federnut (12) und der ersten Plattenoberfläche (15) der ersten Platte (1) etwa 10 % bis etwa 40 % einer Plattendicke (T), vorzugsweise etwa 20 % einer Plattendicke (T) beträgt.

7. Plattensatz nach einem der vorstehenden Ansprüche, wobei die erste untere Rundung (81) ein erster Radius (r1) ist, der etwa 5 % bis etwa 15 % der Plattendicke (T), vorzugsweise etwa 10 % einer Plattendicke (T) beträgt.

8. Plattensatz nach einem der vorstehenden Ansprüche, wobei die zweite untere Rundung (82) ein zweiter Radius (r2) ist, der etwa 5 % bis etwa 15 % der Plattendicke (T), vorzugsweise etwa 10 % einer Plattendicke (T) beträgt.

9. Plattensatz nach einem der vorstehenden Ansprüche, wobei die erste Platte (1) eine erste Kantenfeder (16) mit einer ersten
Verriegelungsoberfläche (17) umfasst, die im Wesentlichen parallel zu der Verbindungsebene (J) verläuft.

10. Plattensatz nach einem der vorstehenden Ansprüche, wobei ein Winkel (β) zwischen der Verbindungsebene (J) und der zweiten Hauptebene etwa 45° beträgt.

11. Plattensatz nach einem der vorstehenden Ansprüche, wobei die erste Kante (11) der ersten Platte (1) eine zweite Kantenfeder (18) an der Außenecke (72) umfasst, wobei die zweite Kante (21) der zweiten Platte (2) eine dritte Kantenfeder (25) an der Außenecke umfasst, wobei eine erste Verriegelungsoberfläche (19) der zweiten Kantenfeder (18) konfiguriert ist, um mit einer zweiten Verriegelungsoberfläche (26) der zweiten Kantenfeder (25) zusammenzuwirken, um in der zweiten Richtung (D2) zu verriegeln, die senkrecht zu der ersten Hauptebene verläuft.

12. Plattensatz nach einem der vorstehenden Ansprüche, wobei eine Breite (W1) der ersten Verriegelungsfeder (13) in der ersten Richtung (D1) an einer dritten Verriegelungsoberfläche (40) der ersten Platte (1) etwa 10 % bis etwa 50 % der Plattendicke (T), vorzugsweise etwa 20 % der Plattendicke (T), mehr bevorzugt etwa 40 % der Plattendicke (T), noch mehr bevorzugt etwa 30 % der Plattendicke (T) beträgt.

13. Plattensatz nach Anspruch 12, wobei die Breite (W1) der ersten Verriegelungsfeder (13) etwa gleich oder größer ist als eine Breite (W2) der zweiten Verriegelungsfeder (22) von einer vierten Verriegelungsoberfläche (28) zu einer fünften Verriegelungsoberfläche (29) der zweiten Platte in der ersten Richtung (D1).

14. Plattensatz nach Anspruch 13, wobei die dritte
Verriegelungsoberfläche (40) der ersten Platte (1) konfiguriert ist, um mit der fünften Verriegelungsoberfläche (29) der zweiten Platte (2) zusammenzuwirken, um die erste Platte (1) und die zweite Platte (2) in der ersten Richtung (D1) miteinander zu verriegeln.

15. Plattensatz nach Anspruch 13 oder Anspruch 14, wobei die vierte Verriegelungsoberfläche (28) der zweiten Platte (2) konfiguriert ist, um mit einer sechsten Verriegelungsoberfläche (50) der ersten Platte (1) zusammenzuwirken, um die erste Platte (1) und die zweite Platte (2) in der ersten Richtung (D1) miteinander zu verriegeln.

## Revendications

1. Ensemble de panneaux comprenant un premier panneau (1) avec un premier plan principal et un second panneau (2) avec un second plan principal, dans lequel le premier panneau (1) et le second panneau (2) sont pourvus d'un dispositif de verrouillage mécanique pour le verrouillage d'un premier bord (11) du premier panneau (1) à un second bord (21) du second panneau (2) au niveau d'un plan de jonction (J) et au niveau d'un coin, dans lequel le premier plan principal est essentiellement perpendiculaire au second plan principal et le plan de jonction (J) s'étend au niveau d'un angle par rapport au premier plan principal et au second plan principal entre le premier plan principal et le second plan principal, dans lequel le plan de jonction (J) s'étend d'un coin intérieur (71) au niveau d'un coin extérieur (72), dans lequel le premier bord (11) du premier panneau (1) comprend une première rainure de languette (12) et une première languette de verrouillage (13), dans lequel le second bord (21) du second panneau (2) comprend une deuxième languette de verrouillage (22), et une deuxième et une troisième rainure de languette (23, 24), dans lequel la deuxième languette de verrouillage (22) est conçue pour coopérer avec la première rainure de languette (12) et la première languette de verrouillage (13) est conçue pour coopérer avec la deuxième rainure de languette (23), afin de verrouiller ensemble le premier panneau (1) et le second panneau (2) dans une première direction (D1) qui est perpendiculaire au second plan principal, et dans lequel le premier bord (11) comprend un élément de verrouillage (60), ledit élément de verrouillage (60) étant conçu pour coopérer avec la troisième rainure de languette (24) afin de verrouiller ensemble le premier panneau (1) et le second panneau (2) dans une seconde direction (D2) qui est perpendiculaire au premier plan principal, dans lequel une surface inférieure (b) de la première rainure de languette (12) du premier panneau (1) s'écarte d'une première surface de panneau (15) du premier panneau (1),
dans lequel la surface inférieure (b) est divergente dans une direction allant du coin extérieur (72) vers le coin intérieur (71), **caractérisé en ce**
**que** la première rainure de languette (12) comprend un premier arrondi inférieur (81) et un second arrondi inférieur opposé (82), et
**que** la surface inférieure (b) s'étend entre le premier arrondi inférieur (81) et le second arrondi inférieur (82).

2. Ensemble de panneaux selon la revendication 1, dans lequel une distance (A) entre la surface inférieure (b) de la première rainure de languette (12) et la première surface de panneau (15) du premier panneau (1) augmente vers le coin intérieur (71).

3. Ensemble de panneaux selon la revendication 1 ou la revendication 2, dans lequel l'élément de verrouillage (60) comprend une languette flexible (30) agencée dans une rainure d'insertion (14).

4. Ensemble de panneaux selon l'une quelconque des revendications précédentes, dans lequel l'angle (α) entre la surface inférieure (b) de la première rainure de languette (12) et la première surface de panneau (15) est supérieur à zéro jusqu'à environ 45 °, de préférence d'environ 10 ° à environ 30 °, plus préférablement d'environ 20 °.

5. Ensemble de panneaux selon l'une quelconque des revendications précédentes, dans lequel, lorsque le premier panneau (1) et le second panneau (2) sont en position verrouillée, il existe un espace entre un bord extérieur (27) de la deuxième languette de verrouillage (22) et la surface inférieure (b) de la première rainure de languette (12).

6. Ensemble de panneaux selon l'une quelconque des revendications précédentes, dans lequel une distance minimale (A) entre la surface inférieure (b) de la première rainure de languette (12) et la première surface de panneau (15) du premier panneau (1) est compris entre environ 10 % et environ 40 % d'une épaisseur de panneau (T), de préférence d'environ 20 % d'une épaisseur de panneau (T).

7. Ensemble de panneaux selon l'une quelconque des revendications précédentes, dans lequel le premier arrondi inférieur (81) est un premier rayon (r1) qui est compris entre environ 5 % et environ 15 % de l'épaisseur de panneau (T), de préférence est d'environ 10 % d'une épaisseur de panneau (T).

8. Ensemble de panneaux selon l'une quelconque des revendications précédentes, dans lequel le second arrondi inférieur (82) est un second rayon (r2) qui est compris entre environ 5 % et environ 15 % de l'épaisseur de panneau (T), de préférence est d'environ 10 % d'une épaisseur de panneau (T).

9. Ensemble de panneaux selon l'une quelconque des revendications précédentes, dans lequel le premier panneau (1) comprend une première languette de bord (16) avec une première surface de verrouillage (17) qui est essentiellement parallèle au plan de jonction (J).

10. Ensemble de panneaux selon l'une quelconque des revendications 1 à 7, dans lequel l'angle (β) entre le plan de jonction (J) et le second plan principal est d'environ 45 °.

11. Ensemble de panneaux selon l'une quelconque des revendications précédentes, dans lequel le premier bord (11) du premier panneau (1) comprend une deuxième languette de bord (18) au niveau du coin extérieur (72), dans lequel le second bord (21) du second panneau (2) comprend une troisième languette de bord (25) au niveau du coin extérieur, dans lequel une première surface de verrouillage (19) de la deuxième languette de bord (18) est conçue pour coopérer avec une deuxième surface de verrouillage (26) de la deuxième languette de bord (25) pour le verrouillage dans la seconde direction (D2) qui est perpendiculaire au premier plan principal.

12. Ensemble de panneaux selon l'une quelconque des revendications précédentes, dans lequel la largeur (W1) de la première languette de verrouillage (13) dans la première direction (D1) au niveau d'une troisième surface de verrouillage (40) du premier panneau (1) est compris entre environ 10 % et environ 50 % de l'épaisseur de panneau (T), de préférence est d'environ 20 % de l'épaisseur de panneau (T), plus préférablement d'environ 40 % de l'épaisseur de panneau (T), et idéalement d'environ 30 % d'une épaisseur de panneau (T).

13. Ensemble de panneaux selon la revendication 12, dans lequel la largeur (W1) de la première languette de verrouillage (13) est à peu près égale ou supérieure à la largeur (W2) de la deuxième languette de verrouillage (22) entre une quatrième surface de verrouillage (28) et une cinquième surface de verrouillage (29) du second panneau dans la première direction (D1).

14. Ensemble de panneaux selon la revendication 13, dans lequel la troisième surface de verrouillage (40) du premier panneau (1) est conçue pour coopérer avec la cinquième surface de verrouillage (29) du second panneau (2) afin de verrouiller ensemble le premier panneau (1) et le second panneau (2) dans la première direction (D1).

15. Ensemble de panneaux selon la revendication 13 ou la revendication 14, dans lequel la quatrième surface de verrouillage (28) du second panneau (2) est conçue pour coopérer avec une sixième surface de verrouillage (50) du premier panneau (1) afin de verrouiller ensemble le premier panneau (1) et le second panneau (2) dans la première direction (D1).
